# EUROPÄISCHE PATENTSCHRIFT

(11) **EP 1 314 587 B1**
(45) Veröffentlichungstag und Bekanntmachung des Hinweises auf die Patenterteilung: **19.07.2006**
(21) Anmeldenummer: 02026003.0
(22) Anmeldetag: 21.11.2002
(51) Int. Cl.: B60G 21/05

(54) **Verbundlenkerachse für ein Kraftfahrzeug**
Trailing arm twist beam axle for a motor vehicle
Essieu à traverse déformable en torsion pour véhicule automobile

(30) Priorität: 22.11.2001 DE 10157189; 21.11.2002 DE 10254556
(43) Veröffentlichungstag der Anmeldung: 28.05.2003
(73) Patentinhaber: Benteler Automobiltechnik GmbH, 33104 Paderborn (DE)
(72) Erfinder: Streubel, Wolfgang, 32756 Detmold (DE)
(74) Vertreter: Griepenstroh, Jörg

(56) Entgegenhaltungen:
- DE-A- 19 605 283
- DE-A- 19 949 341
- US-A- 4 758 019
- US-A- 6 086 162

## Beschreibung

Die Erfindung betrifft eine Verbundlenkerachse für ein Kraftfahrzeug gemäß den Merkmalen im Oberbegriff des Patentanspruchs 1.

Eine solche Verbundlenkerachse zählt durch die EP 0 681 932 B1 zum Stand der Technik. Sie weist einen sich geradlinig erstreckenden einteiligen stählernen Querträger mit rohrförmigen torsionssteifen Endabschnitten sowie mit einem zwischen den Endabschnitten liegenden torsionsweisen Längenabschnitt auf. Der torsionsweiche Längenabschnitt ist bevorzugt U-förmig ausgebildet und durch radiales Einprägen eines Rohrs gebildet. Er ist daher doppellagig gestaltet. Die Endabschnitte sind mit kastenförmigen stählernen Längslenkern verschweißt. Dazu sind an den Längslenkern aufeinander zu gerichtete Stutzen vorgesehen, an welchen die Endabschnitte befestigt werden.

Durch Verdrehen des Querträgers vor dem Verschweißen kann der jeweils gewünschte Schubmittelpunkt im Fahrzeug eingestellt werden, so dass hierüber ein gewünschtes Fahrverhalten erzielt werden kann.

Schwierigkeiten ergeben sich jedoch bezüglich der Steifigkeit und Festigkeit der Verbindungen des Querträgers mit den Längslenkem, weil die Schweißverbindungen nur auf den Innenseiten und im seitlichen Abstand zu den Längslenkern liegen.

Durch die US-PS 4,758,019 ist eine Verbundlenkerachse für ein Kraftfahrzeug bekannt, bei welcher die Enden eines komplett rohrförmigen Querträgers Ausnehmungen in den kastenförmigen Längslenkern durchsetzen. Die Art der Verbindung ist nicht näher beschrieben. In den Enden sollen jedoch Blattfedern und Puffer angeordnet sein, welche die Vertikalfederung der Verbundlenkerachse gewährleisten sollen.

In der DE 196 05 283 A1 wird eine Längslenkeraufhängung für Fahrzeuge beschrieben, die einen V-förmigen Querträger besitzt, der über vergleichsweise komplizierte kurvenförmige Schweißnähte mit großen kastenartigen Längslenkern verbunden ist. Die Übergangsbereiche zwischen dem Querträger und den Längslenkem sind daher relativ großvolumig. Ein beliebiges Verdrehen des Querträgers relativ zu den Längslenkern vor dem Verschweißen ist nicht möglich.

Der Erfindung liegt - ausgehend vom Stand der Technik - die Aufgabe zugrunde, eine Verbundlenkerachse für ein Kraftfahrzeug bereit zu stellen, bei welcher bei bauraumoptimierter schlanker Ausführung der Längslenker die Spannungen im Übergangsbereich vom Querträger auf die Längslenker auf ein niedriges Niveau gesenkt werden können.

Diese Aufgabe wird gemäß der Erfindung mit den im kennzeichnenden Teil des Patentanspruchs 1 angegebenen Merkmalen gelöst.

Eine bauoptimierte schlanke Ausbildung der Längslenker wird dadurch erreicht, dass diese jeweils aus einer U-förmigen Unterschale und einer U-förmigen Oberschale bestehen, die über die Stirnflächen ihrer einander zugewandten Schenkel verschweißt sind. In den Seitenwänden dieser Längslenker sind Durchbrechungen vorgesehen, deren Querschnitt an die Außenkontur der rohrförmigen Endabschnitte des Querträgers angepasst sind. Im Hinblick auf den Sachverhalt, dass der Querträger vor dem Verschweißen mit den Längslenkern um seine Längsachse zur Einstellung des Schubmittelpunkts drehbar sein soll, sind die Endabschnitte rotationssymmetrisch ausgebildet. Ebenso sind dann auch die Durchbrechungen in den Seitenwänden gestaltet. Von Bedeutung ist, dass die torsionssteifen Endabschnitte des Querträgers die Längslenker auf ihrer gesamten Breite durchsetzen und die Endabschnitte auf beiden Seiten der Längslenker über mehr als die Hälfte des Umfangs mit den Seitenwänden der Längslenker verschweißt sind. Diese Art der Verbindung des Querträgers mit den Längslenkern ermöglicht eine Reduzierung der Spannungen auf ein akzeptables Niveau. Komplizierte Schweißnähte entfallen, so dass auch kein besonderes Schweißverfahren zur Verbindung der Längslenker mit dem Querträger erforderlich ist.

Die die Endabschnitte des Querträgers mit den Längslenkem verbindenden Schweißnähte können sich auf beiden Seiten der Längslenker über den gesamten Umfang der Endabschnitte erstrecken. Denkbar ist aber auch eine Ausführungsform, bei welcher sowohl innen- als auch außenseitig die Schweißnähte sich nur über einen Teil des Umfangs erstrecken. Hierbei können solche Schweißnähte durchgehend sein. Es können aber auch mehrere im Abstand im Umfang aufeinander folgende Schweißnähte vorgesehen werden. Bevorzugt ist eine Ausführungsform, bei welcher auf den Innenseiten der Längslenker über den gesamten Umfang durchgehende Schweißnähte vorgesehen sind, während auf den Außenseiten der Längslenker die Endabschnitte des Querträgers über solche Schweißnähte mit den Längslenkern verbunden werden, die sich nur über einen Teil des Umfangs erstrecken.

Um die Spannungen an den Übergängen von dem Querträger auf die Längsträger noch weiter zu senken, ist gemäß den Merkmalen des Patentanspruchs 2 vorgesehen, dass mindestens auf den dem Querträger zugewandten Seiten der Längslenker die Ränder der Durchbrechungen aus den Ebenen der Seitenwände bogenförmig ausgestülpt sind. Auf diese Weise werden sanfte Radienübergänge geschaffen, die das angestrebte Spannungsverhalten optimieren.

Die Herstellung der Längslenker wird vereinfacht, wenn nach Patentanspruch 3 die Teilungsebene der Längslenker sich in einer durch die gemeinsame Längsachse der Endabschnitte des Querträgers verlaufenden Ebene erstreckt. Denkbar kann es aber auch sein, dass die Teilungsebene etwas unterhalb oder oberhalb der Längsachse der Endabschnitte verläuft.

Das Bauvolumen der Längslenker kann dadurch noch mehr verringert werden, dass entsprechend den Merkmalen des Patentanspruchs 4 die Höhe der Längslenker neben den Endabschnitten des Querträgers etwa dem Durchmesser der Endabschnitte angepasst ist und in den Durchdringungsbereichen der Endabschnitte die Oberschalen nach oben und die Unterschalen nach unten bogenförmig ausgewölbt sind. Die Auswölbung entspricht etwa der doppelten Wanddicke der Ober- und Unterschalen.

Die Schlankheit der Längslenker wird durch die Merkmale des Patentanspruchs 5 gefördert. Danach entspricht die Breite der Längslenker in den Durchdringungsbereichen der Endabschnitte des Querträgers etwa dem Durchmesser der Endabschnitte.

Der mit torsionssteifen Endabschnitten sowie einem zwischen den Endabschnitten liegenden torsionsweichen Längenabschnitt versehene Querträger kann gemäß Patentanspruch 6 dadurch gebildet sein, dass der Querträger durch Stanzen, rohrförmiges Biegen und Schweißen einer ebenen Blechplatine gebildet ist. Er hat demnach über seine gesamte Länge im Querschnitt eine gleichmäßig rohrförmige Kontur. Der Querträger ist folglich über seine gesamte Länge einlagig gestaltet, so dass er zwar gegen Korrosion geschützt werden muss, jedoch endseitig offen ausgebildet sein kann. Der segmentartig ausgeschnittene Bereich verläuft gleichmäßig kurvenförmig von dem einen bis zum anderen Endabschnitt.

Denkbar ist aber auch eine Ausführungsform, gemäß welcher nach Patentanspruch 7 der zwischen den Endabschnitten liegende U-förmige torsionsweiche Längenabschnitt des Querträgers durch radiales Einprägen eines Rohrs gebildet ist. Der Querträger ist dadurch im mittleren torsionsweichen Längenabschnitt doppellagig gestaltet.

Bei einem derartigen Querträger kann es nach Patentanspruch 8 dann sinnvoll sein, die Endabschnitte des Querträgers auszuschäumen, um einen sicheren Korrosionsschutz zu schaffen.

Zusätzlich kann es gemäß den Merkmalen des Patentanspruchs 9 noch zweckmäßig sein, die Stirnseiten des Querträgers mit Abdeckkappen zu versehen. Diese können insbesondere aus Kunststoff bestehen.

Die Erfindung ist nachfolgend anhand eines in den Zeichnungen dargestellten Ausführungsbeispiels näher erläutert. Es zeigen:
- Figur 1: in der Perspektive eine Verbundlenkerachse für ein Kraftfahrzeug;
- Figur 2: in vergrößertem Maßstab in der Perspektive einen Endabschnitt der Verbundlenkerachse der Figur 1;
- Figur 3: einen vertikalen Längsschnitt durch die Darstellung der Figur 2 entlang der Linie III-III in Richtung der Pfeile IIIa gesehen und
- Figur 4: in schematischer Draufsicht eine Platine zur Fertigung des Querträgers der Verbundlenkerachse der Figur 1.

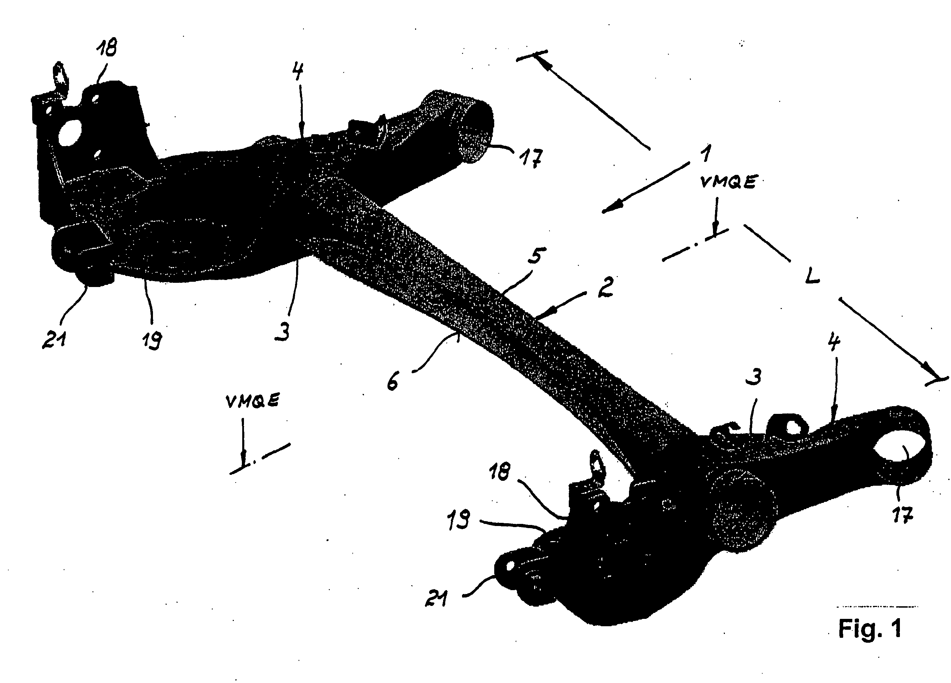

In der Figur 1 ist mit 1 eine Verbundlenkerachse für ein Kraftfahrzeug bezeichnet. Die Verbundlenkerachse 1 weist einen sich geradlinig erstreckenden einteiligen stählernen Querträger 2 sowie mit den Endabschnitten 3 des Querträgers 2 verbundene stählerne Längslenker 4 auf.

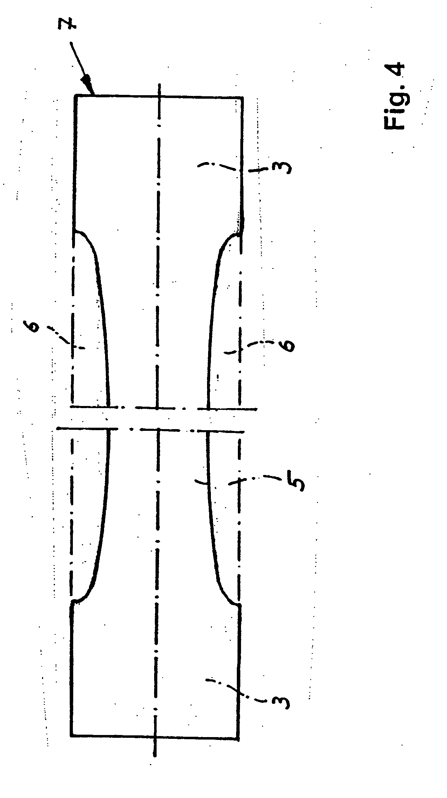

Der Querträger 2 besitzt rohrförmige torsionssteife Endabschnitte 3 und einen zwischen den Endabschnitten 3 liegenden torsionsweichen Längenabschnitt 5. Der torsionsweiche Längenabschnitt 5 ist dadurch gebildet, dass ein Wandabschnitt 6 segmentartig entfernt worden ist. Die Umfangslänge der stehen gebliebenen Wand 22 nimmt - ausgehend von der vertikalen Mittelquerebene VMQE des Querträgers 2 - bis zu den umfangsseitig geschlossenen Endabschnitten 3 kontinuierlich zu. Der Querträger 2 ist durch Stanzen, rohrförmiges Biegen und Längsnahtschweißen einer ebenen rechteckigen Blechplatine 7 gebildet. Dadurch hat der Querträger 2 über seine gesamte Länge L im Querschnitt eine gleichmäßige rohrförmige Kontur. Die Blechplatine 7 ist in Figur 4 schematisch angedeutet.

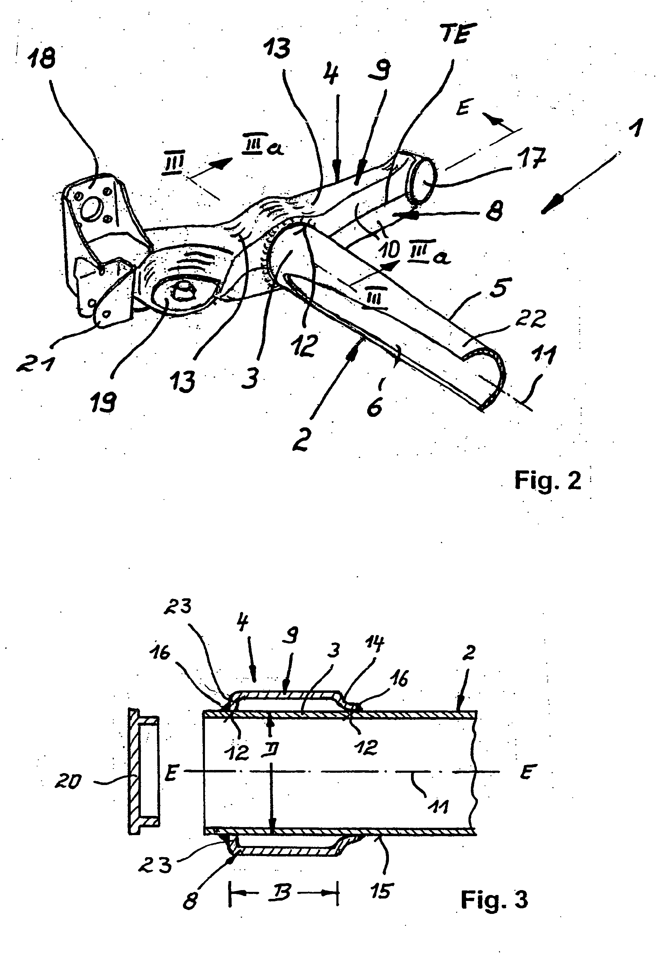

Die Längslenker 4 sind kastenförmig gestaltet und umfassen jeweils eine U-förmige Unterschale 8 und eine U-förmige Oberschale 9, die über die Stimflächen ihrer einander zugewandten Schenkel 10 zusammengeschweißt sind (Figur 2). Die Teilungsebene TE der Längslenker 4 erstreckt sich in der durch die Längsachse 11 der Endabschnitte 3 des Querträgers 2 verlaufenden Ebene E-E.

In den durch die Schenkel 10 gebildeten Seitenwänden der Längslenker 4 sind an die Außenkonturen der rohrförmigen Endabschnitte 3 des Querträgers 2 angepasste Durchbrechungen 12 vorgesehen. Die Endabschnitte 3 durchsetzen die Längslenker 4 auf ihrer gesamten Breite B.

Die Höhe der Längslenker 4 in den Bereichen 13 neben den Endabschnitten 3 des Querträgers 2 ist etwa dem Durchmesser D der Endabschnitte 3 angepasst. In den Durchdringungsbereichen sind die Oberschalen 9 nach oben und die Unterschalen 8 nach unten bogenförmig gewölbt. Auf diese Weise können die Ränder 14 der dem torsionsweichen Längenabschnitt 5 zugewandten Durchbrechungen 12 aus den Ebenen der durch die Schenkel 10 gebildeten Seitenwände bogenförmig ausgestülpt (diffusorartig) werden (Figuren 1 bis 3), so dass diese sich an die Oberflächen 15 der Endabschnitte 3 anschmiegen. Die Stirnseiten der ausgestülpten Ränder 14 sind mit den Oberflächen 15 durch Kehlschweißnähte 16 verbunden (Figur 3). Auch die außen liegenden, senkrecht auf die Endabschnitte 3 stoßenden Ränder 23 der Durchbrechungen 12 sind durch Kehlnähte 16 mit den Endbereichen 3 verschweißt.

Die Breite B der Längslenker 4 entspricht in den Durchdringungsbereichen der Endabschnitte 3 des Querträgers 2 etwa dem Durchmesser D der Endabschnitte 3 (Figur 3).

An einem Ende weisen die Längslenker 4 Lageraugen 17 auf, über die sie mit dem Fahrgestell des Kraftfahrzeugs vertikal schwenkbar verbunden werden können.

Am anderen Ende sind die Längslenker 4 jeweils mit einem Radträger 18 zur Lagerung eines Rads sowie mit einem eingeprägten Federteller 19 zur Aufnahme nicht näher dargestellter Schraubendruckfedem versehen.

Die Aufnahmen 21 dienen der Anlenkung von Stoßdämpfern.

Ist der Querträger nicht, wie dargestellt, aus einer ebenen Blechplatine 7 gebildet, sondern aus einem geschweißten oder gezogenen Rohr gefertigt, das im mittleren torsionsweichen Längenabschnitt 5 radial eingeprägt und dadurch hier doppelwandig ausgebildet ist, sind die Endabschnitte 3 eines solchen Querträgers 2 vorzugsweise ausgeschäumt. Auch können dann die Endabschnitte 3 mit stirnseitigen Abdeckkappen 20, insbesondere aus Kunststoff, versehen sein (Figur 3).

### Bezugszeichenaufstellung

- 1 -: Verbundlenkerachse
- 2 -: Querträger v. 1
- 3 -: Endabschnitte v. 2
- 4 -: Längslenker v. 1
- 5 -: torsionsweicher Längenabschnitt
- 6 -: Wandabschnitt v. 5
- 7 -: Blechplatine
- 8 -: Unterschale v. 4
- 9 -: Oberschale v. 4
- 10 -: Schenkel v. 8, 9
- 11 -: Längsachse v. 3
- 12 -: Durchbrechungen in 4
- 13 -: Bereiche v. 4
- 14 -: Ränder v. 12
- 15 -: Oberflächen v. 3
- 16 -: Kehlschweißnähte
- 17 -: Lageraugen
- 18 -: Radträger
- 19 -: Federteller
- 20 -: Abdeckkappe
- 21 -: Aufnahmen
- 22 -: verbliebene Wand
- 23 -: Ränder v. 12

- B-: Breite v. 4
- D -: Durchmesser v. 3
- E-E -: Ebene durch 11
- TE -: Teilungsebene v. 4
- VMQE -: vertikale Mittelquerebene

## Patentansprüche

1. Verbundlenkerachse (1) für ein Kraftfahrzeug, die einen sich geradlinig erstreckenden, einteiligen stählernen Querträger (2) mit rohrförmigen torsionssteifen Endabschnitten (3) sowie mit einem zwischen den Endabschnitten (3) liegenden torsionsweichen Längenabschnitt (5) und zwei mit den Endabschnitten (3) verschweißte kastenförmige stählerne Längslenker (4) umfasst, **dadurch gekennzeichnet, dass** die rohrförmigen Endabschnitte (3) des Querträgers (2) an ihre Außenkonturen angepasste Durchbrechungen (12) in den Seitenwänden der jeweils aus einer U-förmigen Unterschale (8) und einer U-förmigen Oberschale (9) über ihre einander zugewandten Schenkel (10) zusammen geschweißten Längslenker (4) durchdringen und auf beiden Seiten der Längslenker (4) über mehr als die Hälfte des Umfangs mit den Seitenwänden der Längslenker (4) verschweißt sind.

2. Verbundlenkerachse nach Patentanspruch 1, **dadurch gekennzeichnet, dass** mindestens auf den dem torsionsweichen Längenabschnitt (5) des Querträgers (2) zugewandten Seiten der Längslenker (4) die Ränder (14) der Durchbrechungen (12) aus den Ebenen der Seitenwände bogenförmig ausgestülpt sind.

3. Verbundlenkerachse nach Patentanspruch 1 oder 2, **dadurch gekennzeichnet, dass** die Teilungsebene (TE) der Längslenker (4) sich in einer durch die Längsachse (11) der Endabschnitte (3) des Querträgers (2) verlaufenden Ebene (E-E) erstreckt.

4. Verbundlenkerachse nach einem der Patentansprüche 1 bis 3, **dadurch gekennzeichnet, dass** die Höhe der Längslenker (4) neben den Endabschnitten (3) des Querträgers (2) etwa dem Durchmesser (D) der Endabschnitte (3) angepasst ist und in den Durchdringungsbereichen der Endabschnitte (3) die Oberschalen (9) nach oben und die Unterschalen (8) nach unten bogenförmig gewölbt sind.

5. Verbundlenkerachse nach einem der Patentansprüche 1 bis 4, **dadurch gekennzeichnet, dass** die Breite (B) der Längslenker (4) in den Durchdringungsbereichen der Endabschnitte (3) des Querträgers (2) etwa dem Durchmesser (D) der Endabschnitte (3) entspricht.

6. Verbundlenkerachse nach einem der Patentansprüche 1 bis 5, **dadurch gekennzeichnet, dass** der über seine gesamte Länge (L) im Querschnitt eine gleichmäßige rohrförmige Kontur aufweisende Querträger (2) zwischen den Endabschnitten (3) segmentartig ausgeschnitten ist, wobei die Umfangslänge der verbliebenen Wand (22) von der vertikalen Mittelquerebene (VMQE) des Querträgers (2) aus bis zu den Endabschnitten (3) kontinuierlich zunimmt.

7. Verbundlenkerachse nach einem der Patentansprüche 1 bis 5, **dadurch gekennzeichnet, dass** der zwischen den Endabschnitten (3) liegende, U-förmig gestaltete torsionsweiche Längenabschnitt (5) des Querträgers (2) durch radiales Einprägen eines Rohrs doppelwandig ausgebildet ist.

8. Verbundlenkerachse nach einem der Patentansprüche 1 bis 7, **dadurch gekennzeichnet, dass** die Endabschnitte (3) des Querträgers (2) ausgeschäumt sind.

9. Verbundlenkerachse nach einem der Patentansprüche 1 bis 8, **dadurch gekennzeichnet, dass** die Stirnseiten des Querträgers (2) mit Abdeckkappen (20) versehen sind.

## Claims

1. Twist-beam axle (1) for a motor vehicle, which comprises a rectilinear, one-part steel crossmember (2) with tubular, torsionally rigid end portions (3) and with a torsionally flexible lengthwise portion (5) situated between the end portions (3), and two box-shaped steel longitudinal links (4) welded to the end portions (3), **characterized in that** the tubular end portions (3) of the crossmember (2) engage through apertures (12), adapted to their outer contours, in the side walls of the longitudinal links (4), these links being welded together from a U-shaped bottom shell (8) and a U-shaped top shell (9) via their mutually facing arms (10), and are welded over more than half their circumference to the side walls of the longitudinal links (4) on both sides of the longitudinal links (4).

2. Twist-beam axle according to Patent Claim 1, **characterized in that**, at least on those sides of the longitudinal links (4) facing the torsionally flexible lengthwise portion (5) of the crossmember (2), the edges (14) of the apertures (12) are projected arcuately from the planes of the side walls.

3. Twist-beam axle according to Patent Claim 1 or 2, **characterized in that** the parting plane (TE) of the longitudinal links (4) extends in a plane (E-E) passing through the longitudinal axis (11) of the end portions (3) of the crossmember (2).

4. Twist-beam axle according to one of Patent Claims 1 to 3, **characterized in that** the height of the longitudinal links (4) adjacent to the end portions (3) of the crossmember (2) is adapted approximately to the diameter (D) of the end portions (3) and, in the engagement regions of the end portions (3), the top shells (9) are curved arcuately upwards and the bottom shells (8) are curved arcuately downwards.

5. Twist-beam axle according to one of Patent Claims 1 to 4, **characterized in that** the width (B) of the longitudinal links (4) in the engagement regions of the end portions (3) of the crossmember (2) corresponds approximately to the diameter (D) of the end portions (3).

6. Twist-beam axle according to one of Patent Claims 1 to 5, **characterized in that** the crossmember (2), which in cross section has a uniform tubular contour over its entire length (L), is cut out segmentally between the end portions (3), the circumferential length of the remaining wall (22) continually increasing from the vertical transverse mid-plane (VMQE) of the crossmember (2) to the end portions (3).

7. Twist-beam axle according to one of Patent Claims 1 to 5, **characterized in that** the U-shaped, torsionally flexible lengthwise portion (5) of the crossmember (2) situated between the end portions (3) is designed to have a double wall by radially pressing in a tube.

8. Twist-beam axle according to one of Patent Claims 1 to 7, **characterized in that** the end portions (3) of the crossmember (2) are filled with foam.

9. Twist-beam axle according to one of Patent Claims 1 to 8, **characterized in that** the terminal sides of the crossmember (2) are provided with cover caps (20).

## Revendications

1. Essieu à traverse déformable en torsion (1) pour un véhicule qui comprend une traverse (2) en acier d'une seule pièce, s'étendant de façon rectiligne, avec des tronçons d'extrémité (3) tubulaires rigide à la torsion, ainsi qu'avec un tronçon longitudinal (5) flexible à la torsion, situé entre les tronçons d'extrémité (3) et deux bras oscillants longitudinaux en acier en forme de caissons soudés aux tronçons d'extrémité (3), **caractérisé en ce que** les tronçons d'extrémité (3) tubulaires de la traverse (2) traversent les parois latérales d'un bras oscillant longitudinal (4) soudé conjointement sur ses jambages (10) dirigés l'un vers l'autre respectivement à partir d'une coque inférieure en forme de U (8) et d'une coque supérieure en forme de U (9), et sont soudés sur les deux côtés du bras oscillant longitudinal (4) sur plus de la moitié de la périphérie avec les parois latérales du bras oscillant longitudinal (4).

2. Essieu à traverse déformable en torsion selon la revendication 1, **caractérisé en ce qu'**au moins sur les côtés du bras oscillant longitudinal (4) dirigés vers le tronçon longitudinal flexible à la torsion (5) de la traverse (2), les bords (14) des passages (12) forment une protubérance arquée à partir des plans des parois latérales.

3. Essieu à traverse déformable en torsion selon la revendication 1 ou 2, **caractérisé en ce que** le plan de division (TE) du bras oscillant longitudinal (4) s'étend dans un plan (E-E) traversant l'axe longitudinal (11) des tronçons d'extrémité (3) de la traverse (2).

4. Essieu à traverse déformable en torsion selon l'une quelconque des revendications 1 à 3, **caractérisé en ce que** la hauteur du bras oscillant longitudinal (4) à côté des tronçons d'extrémité (3) de la traverse (2) est adaptée sensiblement au diamètre (D) des sections d'extrémité (3) et, dans les zones de traversée des tronçons d'extrémité (3), les coques supérieures (9) sont courbées vers le haut et les coques inférieures (8) sont courbées vers le bas, en forme d'arc.

5. Essieu à traverse déformable en torsion selon l'une quelconque des revendications 1 à 4, **caractérisé en ce que** la largeur (B) du bras oscillant longitudinal (4) correspond, dans les zones de passage des tronçons d'extrémité (3) de la traverse (2), sensiblement au diamètre (D) des tronçons d'extrémité (3).

6. Essieu à traverse déformable en torsion selon l'une quelconque des revendications 1 à 5, **caractérisé en ce que** la traverse (2) présentant un contour tubulaire uniforme sur toute sa longueur (L) en section transversale, est découpée entre les tronçons d'extrémité (3) en segments, de sorte que la longueur périphérique de la paroi restante (22) augmente continuellement à partir du plan médian vertical (VMQE) de la traverse (2) jusqu'aux tronçons d'extrémité (3).

7. Essieu à traverse déformable en torsion selon l'une quelconque des revendications 1 à 5, **caractérisé en ce que** le tronçon longitudinal (5) flexible en torsion, conçu en forme de U, se situant entre les tronçons d'extrémité (3) de la traverse (2), est formé par l'empreinte radiale d'un tube à double paroi.

8. Essieu à traverse déformable en torsion selon l'une quelconque des revendications 1 à 7, **caractérisé en ce que** les tronçons d'extrémité (3) de la traverse (2) sont garnis de mousse.

9. Essieu à traverse déformable en torsion selon l'une quelconque des revendications 1 à 8, **caractérisé en ce que** les côtés frontaux de la traverse (2) sont munis de capuchons couvrants (20).
